# EUROPEAN PATENT APPLICATION

(11) **EP 4 637 232 A1**
(43) Date of publication of application: **22.10.2025**
(21) Application number: 24744300.5
(22) Date of filing: 17.01.2024
(51) Int. Cl.: H04W 64/00

(54) **METHOD AND APPARATUS FOR DETERMINING POSITION OF TERMINAL DEVICE**

(30) Priority: 18.01.2023 CN 202310097538
(71) Applicant: Huawei Technologies Co., Ltd., Shenzhen, Guangdong 518129 (CN)
(72) Inventor: CHEN, Ying, Shenzhen, Guangdong 518129 (CN); QIAO, Yunfei, Shenzhen, Guangdong 518129 (CN); WANG, Yu, Shenzhen, Guangdong 518129 (CN); TIE, Xiaolei, Shenzhen, Guangdong 518129 (CN); ZHANG, Jingwei, Shenzhen, Guangdong 518129 (CN)
(74) Representative: Körber, Martin Hans
(86) International application number: PCT/CN2024/072754
(87) International publication number: WO 2024/153125

(57) **Abstract**

This application provides a method for determining a location of a terminal device and an apparatus, to determine a location of a terminal device in a satellite communication system. The method includes: A first communication apparatus determines first information, or the first communication apparatus receives the first information from a second communication apparatus or a third communication apparatus, where the first information includes at least one of time required for a first reference signal to arrive at the third communication apparatus from a satellite, time required for a second reference signal to arrive at the satellite from the third communication apparatus, a position at which the satellite sends the first reference signal, and a position at which the satellite receives the second reference signal, the second communication apparatus communicates with the third communication apparatus via the satellite, and the satellite is configured to forward the first reference signal and the second reference signal. The first communication apparatus determines a location of the third communication apparatus based on the first information, where the third communication apparatus includes the terminal device.

## Description

This application claims priority to Chinese Patent Application No. 202310097538.8, filed with the China National Intellectual Property Administration on January 18, 2023 and entitled "METHOD FOR DETERMINING LOCATION OF TERMINAL DEVICE AND APPARATUS", which is incorporated herein by reference in its entirety.

### TECHNICAL FIELD

This application relates to the communication field, and more specifically, to a method for determining a location of a terminal device and an apparatus.

### BACKGROUND

Satellite communication has unique advantages over terrestrial communication: For example, a wider coverage area can be provided. A base station deployed on a satellite is not vulnerable to natural disasters or external forces. If satellite communication is introduced into a 5th generation (5th generation, 5G) communication system, communication services can be provided for some areas, such as oceans or forests, that cannot be covered by a terrestrial communication network. Reliability of 5G communication can be enhanced, for example, better communication services are ensured for air planes, trains, and users on these transportation means. More data transmission resources can be further provided for 5G communication, improving a network rate. Therefore, supporting both terrestrial communication and satellite communication is an inevitable trend of 5G communication, achieving great benefits in terms of wide coverage, reliability, multi-connection, a high throughput, and the like.

Currently, satellite communication has been introduced into the 3rd generation partnership project (3rd generation partnership project, 3GPP) standard, and is used as a communication scenario of 5G communication. In existing terrestrial communication, a network side may locate a terminal device, and may complete location verification of the terminal device. However, in a 3GPP satellite communication system, a location of a terminal device cannot be determined, and location verification of the terminal device cannot be implemented. Therefore, a problem of how to determine the location of the terminal device in the satellite communication system needs to be urgently resolved.

This application provides a method for determining a location of a terminal device and an apparatus, to determine the location of the terminal device in a satellite communication system.

According to a first aspect, a method for determining a location of a terminal device is provided. The method may be performed by a first communication apparatus. The method includes: A first communication apparatus obtains first information, where the first information includes at least one of time required for a first reference signal to arrive at a third communication apparatus from a satellite, time required for a second reference signal to arrive at the satellite from the third communication apparatus, a position at which the satellite sends the first reference signal, and a position at which the satellite receives the second reference signal, the second communication apparatus communicates with the third communication apparatus via the satellite, the satellite is configured to forward the first reference signal and the second reference signal, and the third communication apparatus includes the terminal device; and the first communication apparatus determines a location of the third communication apparatus based on the first information. The first communication apparatus may be a location server, or a chip or a chip system in the location server. The second communication apparatus may be a network device, or a chip or a chip system in the network device.

Based on the foregoing solution, the first communication apparatus may determine the location of the third communication apparatus in a satellite communication system based on at least one of the obtained time required for the first reference signal to arrive at the third communication apparatus from the satellite, the obtained time required for the second reference signal to arrive at the satellite from the third communication apparatus, the obtained position at which the satellite sends the first reference signal, and the obtained position at which the satellite receives the second reference signal, so that location verification of the third communication apparatus in the satellite communication system can be implemented.

With reference to the first aspect, in some implementations of the first aspect, that the first communication apparatus obtains the first information includes: The first communication apparatus receives second information from the second communication apparatus, where the second information includes first time difference information and first position information of the satellite, and the first time difference information is determined based on a first moment at which the second communication apparatus sends the first reference signal to the third communication apparatus and a second moment at which the second communication apparatus receives the second reference signal from the third communication apparatus; the first communication apparatus receives third information, where the third information includes a third moment at which the third communication apparatus receives the first reference signal and a fourth moment at which the third communication apparatus sends the second reference signal, and/or a time difference between the third moment and the fourth moment; and the first communication apparatus determines the first information based on the second information and the third information. The first communication apparatus may determine the first information based on the second information sent by the second communication apparatus and the third information sent by the third communication apparatus, and determine the location of the third communication apparatus in the satellite communication system based on the first information.

With reference to the first aspect, in some implementations of the first aspect, the first position information of the satellite includes a position of the satellite at a first reference moment, and the first reference moment includes at least one of the first moment, the second moment, or an intermediate moment between the first moment and the second moment; or the first position information of the satellite includes a first ephemeris of the satellite. The first reference moment may alternatively be any moment between the first moment and the second moment.

With reference to the first aspect, in some implementations of the first aspect, that the first communication apparatus determines the first information based on the second information and the third information includes: The first communication apparatus determines a delay of a feeder link based on the second information, where the delay of the feeder link includes time required for the first reference signal to arrive at the satellite from the second communication apparatus and/or time required for the second reference signal to arrive at the second communication apparatus from the satellite; and the first communication apparatus determines the first information based on the delay of the feeder link, the second information, and the third information.

With reference to the first aspect, in some implementations of the first aspect, the second information further includes a delay of a feeder link, and the delay of the feeder link includes time required for the first reference signal to arrive at the satellite from the second communication apparatus and/or time required for the second reference signal to arrive at the second communication apparatus from the satellite. In this implementation, the second communication apparatus determines the delay of the feeder link, and sends the determined delay of the feeder link to the first communication apparatus. In this case, the first communication apparatus does not need to determine the delay of the feeder link, and may directly determine the first information based on the second information and the third information, so that processing complexity of the first communication apparatus can be reduced.

With reference to the first aspect, in some implementations of the first aspect, the second information further includes a forwarding delay of forwarding the first reference signal by the satellite and/or a forwarding delay of forwarding the second reference signal by the satellite.

Based on the foregoing solution, the first communication apparatus may deduct the forwarding delay of forwarding the first reference signal by the satellite and/or the forwarding delay of forwarding the second reference signal by the satellite from the delay of the feeder link. This can improve accuracy of the first information determined by the first communication apparatus, and can improve accuracy of a determined location of the third communication apparatus.

With reference to the first aspect, in some implementations of the first aspect, that the first communication apparatus obtains the first information includes: The first communication apparatus receives fourth information, where the fourth information includes second time difference information and second position information of the satellite, and the second time difference information is determined based on a third moment at which the third communication apparatus receives the first reference signal and a fourth moment at which the third communication apparatus sends the second reference signal; and the first communication apparatus determines the first information based on the fourth information.

Based on the foregoing solution, the first communication apparatus may directly determine the first information based on the fourth information sent by the third communication apparatus, and determine the location of the third communication apparatus in the satellite communication system based on the first information. The first communication apparatus does not need to know the first moment at which the second communication apparatus sends the first reference signal and the second moment at which the second communication apparatus receives the second reference signal, and does not need to know the forwarding delay of forwarding the first reference signal by the satellite and the forwarding delay of forwarding the second reference signal by the satellite.

With reference to the first aspect, in some implementations of the first aspect, the second position information of the satellite includes a position of the satellite at a second reference moment, and the second reference moment includes at least one of the third moment, the fourth moment, or an intermediate moment between the third moment and the fourth moment; or the second position information of the satellite includes a second ephemeris of the satellite. The second reference moment may alternatively be any moment between the third moment and the fourth moment.

With reference to the first aspect, in some implementations of the first aspect, that the first communication apparatus obtains the first information includes: The first communication apparatus receives the first information from the second communication apparatus or the third communication apparatus. The second communication apparatus sends the first information determined by the second communication apparatus to the first communication apparatus, or the third communication apparatus sends the first information determined by the third communication apparatus to the first communication apparatus. The first communication apparatus may determine the location of the third communication apparatus in the satellite communication system based on the first information.

According to a second aspect, a method for determining a location of a terminal device is provided. The method may be performed by a second communication apparatus. The method includes: The second communication apparatus sends first information to a first communication apparatus, where the first information includes at least one of time required for a first reference signal to arrive at a third communication apparatus from a satellite, time required for a second reference signal to arrive at the satellite from the third communication apparatus, a position at which the satellite sends the first reference signal, and a position at which the satellite receives the second reference signal, the second communication apparatus communicates with the third communication apparatus via the satellite, the satellite is configured to forward the first reference signal and the second reference signal, and the third communication apparatus includes the terminal device; or the second communication apparatus sends second information to the first communication apparatus, where the second information includes first time difference information and first position information of the satellite, and the first time difference information is determined based on a first moment at which the second communication apparatus sends the first reference signal to the third communication apparatus and a second moment at which the second communication apparatus receives the second reference signal from the third communication apparatus. The first communication apparatus may be a location server, or a chip or a chip system in the location server. The second communication apparatus may be a network device, or a chip or a chip system in the network device.

The method provided in the second aspect is a method on a second communication apparatus side and corresponding to the first aspect. For beneficial effects thereof, directly refer to those of the first aspect.

With reference to the second aspect, in some implementations of the second aspect, the first position information of the satellite includes a position of the satellite at a first reference moment, and the first reference moment includes at least one of the first moment, the second moment, or an intermediate moment between the first moment and the second moment; or the first position information of the satellite includes a first ephemeris of the satellite.

With reference to the second aspect, in some implementations of the second aspect, the second information further includes a delay of a feeder link, and the delay of the feeder link includes time required for the first reference signal to arrive at the satellite from the second communication apparatus and/or time required for the second reference signal to arrive at the second communication apparatus from the satellite.

With reference to the second aspect, in some implementations of the second aspect, the second information further includes a forwarding delay of forwarding the first reference signal by the satellite and/or a forwarding delay of forwarding the second reference signal by the satellite.

With reference to the second aspect, in some implementations of the second aspect, before the second communication apparatus sends the first information to the first communication apparatus, the method further includes: The second communication apparatus receives third information from the third communication apparatus, where the third information includes a third moment at which the third communication apparatus receives the first reference signal and a fourth moment at which the third communication apparatus sends the second reference signal, and/or a time difference between the third moment and the fourth moment; and the second communication apparatus determines the first information based on the third information and the second information.

According to a third aspect, a method for determining a location of a terminal device is provided. The method may be performed by a third communication apparatus. The method includes: The third communication apparatus sends first information to a first communication apparatus, where the first information includes at least one of time required for a first reference signal to arrive at the third communication apparatus from a satellite, time required for a second reference signal to arrive at the satellite from the third communication apparatus, a position at which the satellite sends the first reference signal, and a position at which the satellite receives the second reference signal, the third communication apparatus communicates with a second communication apparatus via the satellite, the satellite is configured to forward the first reference signal and the second reference signal, and the third communication apparatus includes the terminal device; or the third communication apparatus sends fourth information to the first communication apparatus, where the fourth information includes second time difference information and second position information of the satellite, and the second time difference information is determined based on a third moment at which the third communication apparatus receives the first reference signal and a fourth moment at which the third communication apparatus sends the second reference signal. The third communication apparatus may be a terminal device, or a chip or a chip system in the terminal device.

The method provided in the third aspect is a method on a third communication apparatus side and corresponding to the first aspect. For beneficial effects thereof, directly refer to those of the first aspect.

With reference to the third aspect, in some implementations of the third aspect, the second position information of the satellite includes a position of the satellite at a second reference moment, and the second reference moment includes at least one of the third moment, the fourth moment, or an intermediate moment between the third moment and the fourth moment; or the second position information of the satellite includes a second ephemeris of the satellite.

According to a fourth aspect, a method for determining a location of a terminal device is provided. The method includes: A network device sends second information to a location server, where the second information includes first time difference information and first position information of a satellite, the first time difference information is determined based on a first moment at which the network device sends a first reference signal to the terminal device and a second moment at which the network device receives a second reference signal from the terminal device, the network device communicates with the terminal device via the satellite, and the satellite is configured to forward the first reference signal and the second reference signal; the location server receives the second information from the network device; the terminal device sends third information to the location server, where the third information includes a third moment at which the terminal device receives the first reference signal and a fourth moment at which the terminal device sends the second reference signal, and/or a time difference between the third moment and the fourth moment; the location server receives the third information; the location server determines first information based on the second information and the third information, where the first information includes at least one of time required for the first reference signal to arrive at the terminal device from the satellite, time required for the second reference signal to arrive at the satellite from the terminal device, a position at which the satellite sends the first reference signal, and a position at which the satellite receives the second reference signal; and the location server determines the location of the terminal device based on the first information.

With reference to the fourth aspect, in some implementations of the fourth aspect, the first position information of the satellite includes a position of the satellite at a first reference moment, and the first reference moment includes at least one of the first moment, the second moment, or an intermediate moment between the first moment and the second moment; or the first position information of the satellite includes a first ephemeris of the satellite.

With reference to the fourth aspect, in some implementations of the fourth aspect, that the location server determines the first information based on the second information and the third information includes: The location server determines a delay of a feeder link based on the second information, where the delay of the feeder link includes time required for the first reference signal to arrive at the satellite from the network device and/or time required for the second reference signal to arrive at the network device from the satellite; and the location server determines the first information based on the delay of the feeder link, the second information, and the third information.

With reference to the fourth aspect, in some implementations of the fourth aspect, the second information further includes a delay of a feeder link, and the delay of the feeder link includes time required for the first reference signal to arrive at the satellite from the network device and/or time required for the second reference signal to arrive at the network device from the satellite.

With reference to the fourth aspect, in some implementations of the fourth aspect, the second information further includes a forwarding delay of forwarding the first reference signal by the satellite and/or a forwarding delay of forwarding the second reference signal by the satellite.

According to a fifth aspect, a method for determining a location of a terminal device is provided. The method includes: The terminal device sends fourth information to a location server, where the fourth information includes second time difference information and second position information of a satellite, the second time difference information is determined based on a third moment at which the terminal device receives a first reference signal and a fourth moment at which the terminal device sends a second reference signal, a network device communicates with the terminal device via the satellite, and the satellite is configured to forward the first reference signal and the second reference signal; the location server receives the fourth information; the location server determines first information based on the fourth information, where the first information includes at least one of time required for the first reference signal to arrive at the terminal device from the satellite, time required for the second reference signal to arrive at the satellite from the terminal device, a position at which the satellite sends the first reference signal, and a position at which the satellite receives the second reference signal; and the location server determines the location of the terminal device based on the first information.

With reference to the fifth aspect, in some implementations of the fifth aspect, the second position information of the satellite includes a position of the satellite at a second reference moment, and the second reference moment includes at least one of the third moment, the fourth moment, or an intermediate moment between the third moment and the fourth moment; or the second position information of the satellite includes a second ephemeris of the satellite.

According to a sixth aspect, a method for determining a location of a terminal device is provided. The method includes: A network device sends first information to a location server, where the first information includes at least one of time required for a first reference signal to arrive at the terminal device from a satellite, time required for a second reference signal to arrive at the satellite from the terminal device, a position at which the satellite sends the first reference signal, and a position at which the satellite receives the second reference signal, the network device communicates with the terminal device via the satellite, and the satellite is configured to forward the first reference signal and the second reference signal; the location server receives the first information from the network device; and the location server determines the location of the terminal device based on the first information.

According to a seventh aspect, a method for determining a location of a terminal device is provided. The method includes: The terminal device sends first information to a location server, where the first information includes at least one of time required for a first reference signal to arrive at the terminal device from a satellite, time required for a second reference signal to arrive at the satellite from the terminal device, a position at which the satellite sends the first reference signal, and a position at which the satellite receives the second reference signal, the terminal device communicates with a network device via the satellite, and the satellite is configured to forward the first reference signal and the second reference signal; the location server receives the first information from the terminal device; and the location server determines the location of the terminal device based on the first information.

According to an eighth aspect, a communication apparatus is provided. The apparatus may be used in the first communication apparatus in the first aspect. The apparatus includes: a transceiver unit, configured to implement receiving functions of the method in the first aspect; and a processing unit, configured to implement processing functions such as determining the location of the third communication apparatus in the method in the first aspect.

According to a ninth aspect, a communication apparatus is provided. The apparatus may be used in the second communication apparatus in the second aspect. The apparatus includes: a transceiver unit, configured to implement receiving and sending functions of the method in the second aspect; and a processing unit, configured to implement processing functions such as determining the first information in the method in the second aspect.

According to a tenth aspect, a communication apparatus is provided. The apparatus may be used in the third communication apparatus in the third aspect. The apparatus includes a transceiver unit, configured to implement sending functions of the method in the third aspect.

According to an eleventh aspect, a communication device is provided, and includes a processor and a memory. The memory is configured to store a computer program, and the processor is configured to execute the computer program stored in the memory, to enable the communication device to perform the method in any one of the first aspect to the seventh aspect or the possible implementations of the first aspect to the seventh aspect.

According to a twelfth aspect, a communication apparatus is provided, and includes an input/output interface and a logic circuit. The input/output interface is configured to obtain input information and/or output information. The logic circuit is configured to perform the method in any one of the first aspect to the seventh aspect or the possible implementations of the first aspect to the seventh aspect, and perform processing and/or generate output information based on the input information.

According to a thirteenth aspect, a communication system is provided, and includes a first communication apparatus, a second communication apparatus, and a third communication apparatus. The first communication apparatus is configured to implement the method in any one of the first aspect or the possible implementations of the first aspect, the second communication apparatus is configured to implement the method in any one of the second aspect or the possible implementations of the second aspect, and the third communication apparatus is configured to implement the method in any one of the third aspect or the possible implementations of the third aspect.

According to a fourteenth aspect, a communication system is provided, and includes a network device, a terminal device, and a location server. The network device, the terminal device, and the location server are configured to implement the method in any one of the fourth aspect to the seventh aspect or the possible implementations of the fourth aspect to the seventh aspect.

According to a fifteenth aspect, a computer-readable storage medium is provided. The computer-readable storage medium stores a computer program. When the computer program is run on a computer, the computer is enabled to perform the method in any one of the first aspect to the seventh aspect or the possible implementations of the first aspect to the seventh aspect.

According to a sixteenth aspect, a computer program product including instructions is provided. When the instructions are executed by a computer, a communication apparatus is enabled to implement the method in any one of the first aspect to the seventh aspect or the possible implementations of the first aspect to the seventh aspect.

The solutions provided in the fourth aspect to the sixteenth aspect are configured to implement or cooperate with the method provided in the first aspect, the second aspect, or the third aspect, and therefore can achieve a same or corresponding beneficial effect as that in the first aspect, the second aspect, or the third aspect. Details are not described herein again.

### BRIEF DESCRIPTION OF DRAWINGS

FIG. 1 is a diagram of an architecture of a system to which an embodiment of this application is applicable;
FIG. 2 is a diagram of determining round-trip time between a terminal device and a gNB;
FIG. 3 is a diagram of an architecture of a satellite communication system in which a base station is deployed on the ground;
FIG. 4 is a schematic flowchart of a method for determining a location of a terminal device according to an embodiment of this application;
FIG. 5 is a schematic interaction flowchart of a method for determining a location of a terminal device according to an embodiment of this application;
FIG. 6 is a schematic interaction flowchart of another method for determining a location of a terminal device according to an embodiment of this application;
FIG. 7 is a schematic interaction flowchart of another method for determining a location of a terminal device according to an embodiment of this application;
FIG. 8 is a schematic interaction flowchart of another method for determining a location of a terminal device according to an embodiment of this application;
FIG. 9 is a block diagram of a communication apparatus according to an embodiment of this application;
FIG. 10 is a block diagram of another communication apparatus according to an embodiment of this application;
FIG. 11 is a block diagram of another communication apparatus according to an embodiment of this application; and
FIG. 12 is a block diagram of a communication device according to an embodiment of this application.

### DESCRIPTION OF EMBODIMENTS

The following describes technical solutions of this application with reference to the accompanying drawings.

Embodiments of this application may be applied to various communication systems, for example, a wireless local area network (wireless local area network, WLAN) system, a narrowband internet of things (narrowband internet of things, NB-IoT) system, a global system for mobile communications (global system for mobile communications, GSM), an enhanced data rate for GSM evolution (enhanced data rate for gsm evolution, EDGE) system, a wideband code division multiple access (wideband code division multiple access, WCDMA) system, a code division multiple access 2000 (code division multiple access, CDMA 2000) system, a time division-synchronous code division multiple access (time division-synchronous code division multiple access, TD-SCDMA) system, a long term evolution (long term evolution, LTE) system, satellite communication, a 5G communication system, a 6th generation (6th generation, 6G) communication system, or a new communication system emerging in the future.

The communication system to which this application is applicable includes one or more transmitting ends and one or more receiving ends. Signal transmission between the transmitting end and the receiving end may be performed by using a radio wave, or may be performed by using a transmission medium such as visible light, a laser, infrared, and an optical fiber.

For example, the transmitting end may be a terminal device, a base station, or another device that can obtain sensing information and/or artificial intelligence information, or chips or chip systems in these devices. The receiving end may be a sensing center that performs fusion processing on the sensing information and/or the artificial intelligence information, or a chip or a chip system in the sensing center.

The terminal device in embodiments of this application may include various handheld devices, vehicle-mounted devices, wearable devices, or computing devices that have a wireless communication function, or other processing devices connected to a wireless modem. The terminal may be a mobile station (mobile station, MS), a subscriber unit (subscriber unit), user equipment (user equipment, UE), a cellular phone (cellular phone), a smartphone (smart-phone), a wireless data card, a personal digital assistant (personal digital assistant, PDA) computer, a tablet computer, a wireless modem (modem), a handheld device (handset), a laptop computer (laptop computer), an uncrewed aerial vehicle, a machine type communication (machine type communication, MTC) terminal, a wireless terminal in self-driving (self-driving), or the like. The user equipment includes vehicle user equipment.

For example, a network device may be an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, or home NodeB, HNB), a baseband unit (baseband unit, BBU), a device that bears a base station function in device to device (device to device, D2D), an access point (access point, AP) in a wireless fidelity (wireless fidelity, Wi-Fi) system, a radio relay node, a wireless backhaul node, an uncrewed aerial vehicle, a transmission point (transmission point, TP), a transmission reception point (transmission reception point, TRP), a gNB or a transmission point (for example, a TRP or a TP) in new radio (new radio, NR), one antenna panel or a group of antenna panels (including a plurality of antenna panels) of a base station in NR, or a network node that constitutes a gNB or a transmission point, for example, a baseband unit (building baseband unit, BBU) or a distributed unit (distributed unit, DU). Alternatively, a network device may be a vehicle-mounted device, a wearable device, a network device in a 5G network, a network device in an evolved PLMN network, or the like, or a network device deployed on a satellite. This is not limited.

The network device has abundant product forms. For example, in a product implementation process, the BBU and a radio frequency unit (radio frequency unit, RFU) may be integrated into a same device, and the device is connected to an antenna array through a cable (for example but not limited to a feeder). The BBU and the RFU may alternatively be disposed separately, are connected by using an optical fiber, and communicate with each other by using, for example but not limited to a common public radio interface (common public radio interface, CPRI) protocol. In this case, the RFU is usually referred to as a remote radio unit (remote radio unit, RRU), and is connected to the antenna array through a cable. In addition, the RRU may alternatively be integrated with the antenna array. For example, this structure is for an active antenna unit (active antenna unit, AAU) product in a current market.

In addition, the BBU may be further decomposed into a plurality of parts. For example, the BBU may be further divided into a central unit (central unit, CU) and a distributed unit (distribute unit, DU) based on real-time performance of a processed service. The CU is responsible for processing non-real-time protocols and services, and the DU is responsible for processing physical layer protocols and real-time services. Further, some physical layer functions may be separated from the BBU or the DU and integrated into the AAU.

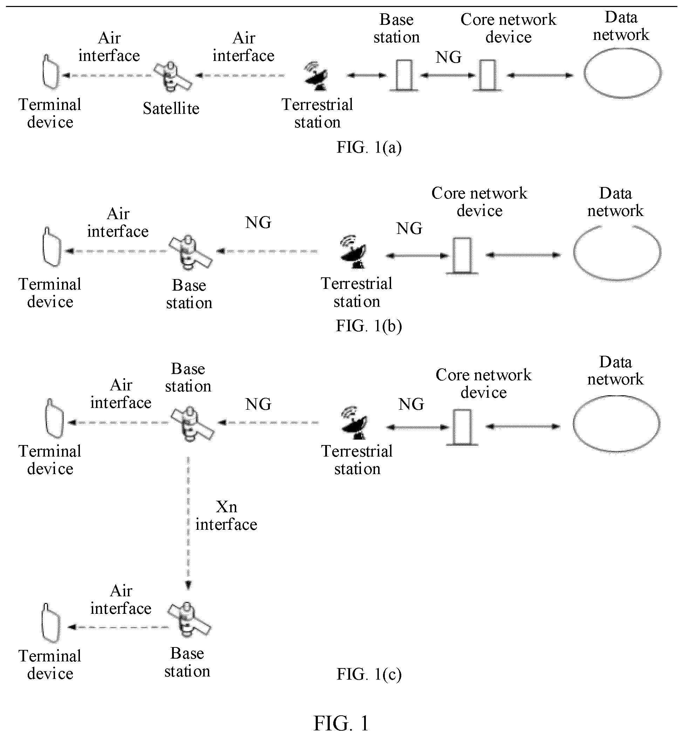

FIG. 1 is a diagram of a system architecture applicable to an embodiment of this application. The system includes a terminal device, a base station, a satellite, a terrestrial station, a core network device, and the like. The base station may be deployed on a satellite, as shown in FIG. 1(b); or the base station may be deployed on the ground, as shown in FIG. 1(a). The satellite is connected to the terrestrial station over a radio link, and the terrestrial station is connected to the base station on the ground or the core network device in a wired or wireless manner. When the base station is deployed on the ground, the base station communicates with the terminal device via the satellite, and the satellite forwards a signal. A radio link may exist between satellites. As shown in FIG. 1(c), the satellite has a function of implementing transparent transmission and forwarding. Network elements in FIG. 1 and interfaces between different network elements are described as follows.

The terminal device includes a mobile device that supports new radio, for example, a mobile device such as a mobile phone or a pad, and may access a satellite network through an air interface and initiate a service such as a call or internet access.

The base station mainly provides a wireless access service, schedules a wireless resource for the accessed terminal device, and provides a reliable wireless transmission protocol, a data encryption protocol, and the like for the terminal device.

The core network device is responsible for services such as user access control, mobility management, session management, user authentication, and charging. The core network includes a plurality of function units, including control plane functional entities and data plane functional entities. An access and mobility management function (access and mobility management function, AMF) unit is responsible for user access management, authentication, and mobility management. A user plane function (user plane function, UPF) is responsible for managing functions such as user plane data transmission and traffic statistics.

The terrestrial station is responsible for forwarding signaling and service data between the satellite and the base station or between the satellite and the core network device.

An air interface is a radio link between the terminal device and the base station, and a radio link between the satellite and the terrestrial station.

An Xn interface is an interface between base stations, and is mainly for signaling exchange such as handover.

An NG interface is an interface between the base station deployed on the satellite and the terrestrial station, and an interface between the terrestrial station and the core network device. The NG interface is mainly used to exchange non-access stratum (non-access stratum, NAS) signaling of the core network device and service data of a user.

It should be noted that embodiments of this application may be applied to communication systems such as 4G and 5G. If embodiments are applied to the 4G communication system, the Xn interface in FIG. 1 is an X2 interface, and the NG interface is an S1 interface.

To facilitate understanding of embodiments of this application, the following briefly describes technical solutions related to embodiments of this application.

Compared with terrestrial communication, satellite communication has unique advantages. For example, satellite communication can provide a wider coverage area, and a base station deployed on a satellite is not vulnerable to natural disasters or external forces. If satellite communication is introduced into a 5G communication system, communication services can be provided for some areas, such as oceans or forests, that cannot be covered by a terrestrial communication network; reliability of 5G communication can be enhanced, for example, better communication services are ensured for air planes, trains, and users on these transportation means; and more data transmission resources can be further provided for 5G communication, improving a network rate. Therefore, supporting both terrestrial communication and satellite communication is an inevitable trend of 5G communication, and has great benefits in terms of wide coverage, reliability, multi-connection, a high throughput, and the like.

Currently, satellite communication has been introduced in a 3GPP standard, and is used as a communication scenario of 5G communication. In the standard, to adapt to features of a high delay and high mobility, a timing technology, a synchronization technology, a hybrid automatic repeat request (hybrid automatic repeat request, HARQ) technology, and other technologies each are enhanced.

In existing terrestrial communication, a network side may locate a terminal device, or the network side may complete location verification of the terminal device. However, a 3GPP satellite communication system does not have this function. Therefore, a next standard version will discuss how to implement location verification of the terminal device in the satellite communication system. This technology is particularly important in a satellite communication scenario. A satellite beam is usually wide, a coverage area of a satellite may include areas of two countries, and different countries have different laws and regulations. Therefore, the network side needs to know the location of the terminal device, to provide different services according to different laws and regulations. If verification of the location of the terminal device fails, the network side may not provide a corresponding service for the terminal device, or forbid the terminal device to continue to connect, or the like.

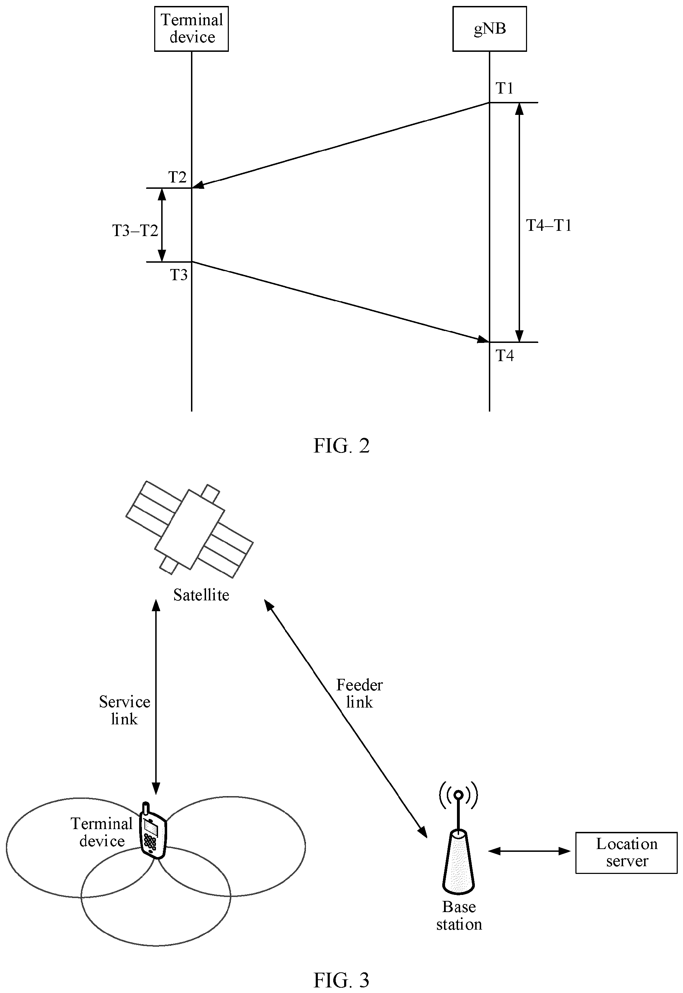

In the terrestrial communication, a location server may determine the location of the terminal device based on a location of a base station and a delay between the base station and the terminal device. Specific determining methods include the following three types.
(1) The location server may determine the location of the terminal device based on a downlink-time difference of arrival (downLink-time difference of arrival, DL-TDOA). A gNB sends a positioning reference signal (positioning reference signal, PRS) to the terminal device. The terminal device receives PRSs from different gNBs, and determines a time difference of the PRS arriving at the terminal device from the gNB. The terminal device reports, to the location server, the time difference of the PRS arriving at the terminal device from the gNB, and the location server determines the location of the terminal device based on the time difference.
(2) The location server may determine the location of the terminal device based on an uplink-time difference of arrival (uplink-time difference of arrival, UL-TDOA). The terminal device sends a sounding reference signal (sounding reference signaling, SRS) to a gNB. The gNB receives the SRS from the terminal device, and determines a time difference of the SRS arriving at the gNB from the terminal device. The gNB reports, to the location server, the time difference of the SRS arriving at the gNB from the terminal device, and the location server determines the location of the terminal device based on the time difference.
(3) The location server may determine the location of the terminal device based on round-trip time (round-trip time, RTT) between the terminal device and a gNB. For example, a time difference between time T4 at which the gNB receives an SRS from the terminal device and time T1 at which the base station sends a PRS is T4 - T1 = gNB (RX - TX), a time difference between time T3 at which the terminal device sends the SRS and time T2 at which the terminal device receives the PRS from the gNB is T3 - T2 = UE (TX - RX), and round-trip time between the terminal device and the gNB is equal to T4 - T1 - (T3 - T2) = gNB (RX - TX) - UE (TX - RX). FIG. 2 is a diagram of determining round-trip time between a terminal device and a gNB.

In satellite communication, when a base station is deployed on the ground, a satellite serves as a forwarding node, and the base station forwards a signal to the terminal device via the satellite, or the terminal device forwards a signal to the base station via the satellite. FIG. 3 is a diagram of an architecture of a satellite communication system in which the base station is deployed on the ground. Round-trip time between the base station and the terminal device includes a delay of a service link and a delay of a feeder link. The delay of the service link includes a transmission delay between the terminal device and the satellite, and the delay of the feeder link includes a transmission delay between the base station and the satellite. In a satellite communication scenario in which the base station is deployed on the ground, a location server cannot determine a location of the terminal device based on downlink-time difference of arrival, uplink-time difference of arrival, or the round-trip time between the base station and the terminal device. Therefore, a problem of how to determine the location of the terminal device in the satellite communication system needs to be urgently resolved.

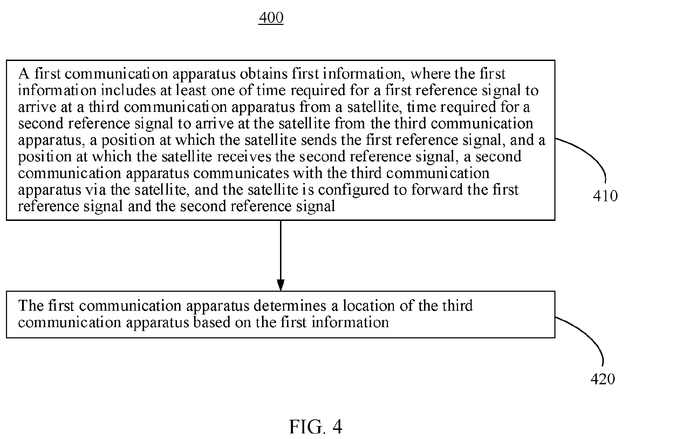

Embodiments of this application provide a method for determining a location of a terminal device, to determine the location of the terminal device in the satellite communication system. FIG. 4 is a schematic flowchart of a method 400 for determining a location of a terminal device according to an embodiment of this application. In this embodiment of this application, a first communication apparatus may be a location server, or a chip or a chip system in the location server, a second communication apparatus may be a network device, or a chip or a chip system in the network device, and a third communication apparatus may be a terminal device, or a chip or a chip system in the terminal device. The network device in this embodiment of this application may be a base station. The location server in this embodiment of this application may be a core network device, or may be a network element of a core network. Optionally, the location server may be deployed on a base station, or may be deployed on a satellite.

410: The first communication apparatus obtains first information, where the first information includes at least one of time required for a first reference signal to arrive at the third communication apparatus from the satellite, time required for a second reference signal to arrive at the satellite from the third communication apparatus, a position at which the satellite sends the first reference signal, and a position at which the satellite receives the second reference signal, the second communication apparatus communicates with the third communication apparatus via the satellite, and the satellite is configured to forward the first reference signal and the second reference signal. The first information includes at least one of a sum of the time required for the first reference signal to arrive at the third communication apparatus from the satellite and the time required for the second reference signal to arrive at the satellite from the third communication apparatus, the position at which the satellite sends the first reference signal, and the position at which the satellite receives the second reference signal. For example, the first reference signal is a PRS, and the second reference signal is an SRS.

In a first implementation, the second communication apparatus sends second information to the first communication apparatus. The second information includes first time difference information and first position information of the satellite, and the first time difference information is determined based on a first moment at which the second communication apparatus sends the first reference signal to the third communication apparatus and a second moment at which the second communication apparatus receives the second reference signal from the third communication apparatus. Correspondingly, the first communication apparatus receives the second information from the second communication apparatus. The third communication apparatus sends third information to the first communication apparatus. The third information includes a third moment at which the third communication apparatus receives the first reference signal and a fourth moment at which the third communication apparatus sends the second reference signal, and/or a time difference between the third moment and the fourth moment. Correspondingly, the first communication apparatus receives the third information. For example, the first communication apparatus receives the third information from the third communication apparatus. For another example, the first communication apparatus receives, from the second communication apparatus, the third information that is from the third communication apparatus. The first communication apparatus determines the first information based on the second information and the third information.

Optionally, the first communication apparatus determines a delay of a feeder link based on the second information. The delay of the feeder link includes time required for the first reference signal to arrive at the satellite from the second communication apparatus and/or time required for the second reference signal to arrive at the second communication apparatus from the satellite. The first communication apparatus determines the first information based on the delay of the feeder link, the second information, and the third information. For example, the delay of the feeder link includes a sum of the time required for the first reference signal to arrive at the satellite from the second communication apparatus and the time required for the second reference signal to arrive at the second communication apparatus from the satellite.

Optionally, the second information further includes a delay of a feeder link, and the delay of the feeder link includes time required for the first reference signal to arrive at the satellite from the second communication apparatus and/or time required for the second reference signal to arrive at the second communication apparatus from the satellite. In this example, the second communication apparatus determines the delay of the feeder link, and sends the determined delay of the feeder link to the first communication apparatus. In this case, the first communication apparatus does not need to determine the delay of the feeder link, and may directly determine the first information based on the second information and the third information, so that processing complexity of the first communication apparatus can be reduced.

For example, the first time difference information includes the first moment at which the second communication apparatus sends the first reference signal to the third communication apparatus and the second moment at which the second communication apparatus receives the second reference signal from the third communication apparatus, and/or a time difference between the first moment and the second moment.

Optionally, the first position information of the satellite includes a position of the satellite at a first reference moment, and the first reference moment includes at least one of the first moment, the second moment, or an intermediate moment between the first moment and the second moment; or the first position information of the satellite includes a first ephemeris of the satellite. Optionally, the first reference moment may alternatively be any moment between the first moment and the second moment, or the first reference moment may be a moment at which the second communication apparatus sends the second information. The first reference moment may be a predefined moment, or may be a moment determined by the second communication apparatus. This is not specifically limited in this embodiment of this application.

For example, the first position information of the satellite includes a position of the satellite at the first moment and a position of the satellite at the second moment. For example, the first position information of the satellite includes a position of the satellite at the intermediate moment between the first moment and the second moment. For example, the first position information of the satellite includes the first ephemeris of the satellite in a time period from the first moment to the second moment.

Optionally, the second information further includes a forwarding delay of forwarding the first reference signal by the satellite and/or a forwarding delay of forwarding the second reference signal by the satellite. The second information sent by the second communication apparatus to the first communication apparatus further includes the forwarding delay of forwarding the first reference signal by the satellite and/or the forwarding delay of forwarding the second reference signal by the satellite. The first communication apparatus may deduct the forwarding delay of forwarding the first reference signal by the satellite and/or the forwarding delay of forwarding the second reference signal by the satellite from the delay of the feeder link. This can improve accuracy of the first information determined by the first communication apparatus, and can improve accuracy of a determined location of the third communication apparatus. The forwarding delay of forwarding the first reference signal by the satellite and/or the forwarding delay of forwarding the second reference signal by the satellite are/is determined based on a hardware capability of the satellite or a specification of the satellite.

Different information in the second information may be placed in one piece of signaling, or may be placed in different pieces of signaling. This is not specifically limited in this embodiment of this application.

Optionally, before the second communication apparatus sends the second information to the first communication apparatus, the first communication apparatus sends first indication information to the second communication apparatus. The first indication information indicates the second communication apparatus to send the second information. Correspondingly, the second communication apparatus receives the first indication information from the first communication apparatus, and sends the second information to the first communication apparatus based on the first indication information.

In a second implementation, the third communication apparatus sends fourth information to the first communication apparatus. The fourth information includes second time difference information and second position information of the satellite, and the second time difference information is determined based on a third moment at which the third communication apparatus receives the first reference signal and a fourth moment at which the third communication apparatus sends the second reference signal. Correspondingly, the first communication apparatus receives the fourth information. For example, the first communication apparatus receives the fourth information from the third communication apparatus. For another example, the first communication apparatus receives, from the second communication apparatus, the fourth information that is from the third communication apparatus. The first communication apparatus determines the first information based on the fourth information.

In this implementation, the first communication apparatus may directly determine the first information based on the fourth information sent by the third communication apparatus, does not need to know a first moment at which the second communication apparatus sends the first reference signal and a second moment at which the second communication apparatus receives the second reference signal, and does not need to know a forwarding delay of forwarding the first reference signal by the satellite and a forwarding delay of forwarding the second reference signal by the satellite.

For example, the second time difference information includes the third moment at which the third communication apparatus receives the first reference signal and the fourth moment at which the third communication apparatus sends the second reference signal, and/or a time difference between the third moment and the fourth moment.

Optionally, the second position information of the satellite includes a position of the satellite at a second reference moment, and the second reference moment includes at least one of the third moment, the fourth moment, or an intermediate moment between the third moment and the fourth moment; or the second position information of the satellite includes a second ephemeris of the satellite. Optionally, the second reference moment may be any moment between the third moment and the fourth moment, or the second reference moment may be a moment at which the third communication apparatus sends the fourth information. The second reference moment may be a predefined moment, or may be a moment determined by the second communication apparatus. This is not specifically limited in this embodiment of this application.

For example, the second position information of the satellite includes a position of the satellite at the third moment and a position of the satellite at the fourth moment. For example, the second position information of the satellite includes a position of the satellite at the intermediate moment between the third moment and the fourth moment. For example, the second position information of the satellite includes the second ephemeris of the satellite in a time period from the third moment to the fourth moment.

Optionally, the third communication apparatus sends capability information of the third communication apparatus to the first communication apparatus. The capability information indicates a computing capability of the third communication apparatus. Correspondingly, the first communication apparatus receives the capability information. The first communication apparatus determines, based on the capability information of the third communication apparatus, whether the third communication apparatus needs to report the fourth information. If the first communication apparatus determines that the third communication apparatus needs to report the fourth information, the first communication apparatus sends second indication information to the third communication apparatus, where the second indication information indicates the third communication apparatus to send the fourth information. Correspondingly, the third communication apparatus receives the second indication information from the first communication apparatus, and sends the fourth information to the first communication apparatus based on the second indication information.

In a third implementation, the second communication apparatus sends the first information to the first communication apparatus. Correspondingly, the first communication apparatus receives the first information from the second communication apparatus.

Optionally, before the second communication apparatus sends the first information to the first communication apparatus, the third communication apparatus sends third information to the second communication apparatus. The third information includes a third moment at which the third communication apparatus receives the first reference signal and a fourth moment at which the third communication apparatus sends the second reference signal, and/or a time difference between the third moment and the fourth moment. Correspondingly, the second communication apparatus receives the third information from the third communication apparatus. The second communication apparatus determines the first information based on second information determined by the second communication apparatus and the third information sent by the third communication apparatus.

Optionally, the first communication apparatus sends third indication information to the second communication apparatus, where the third indication information indicates the second communication apparatus to send the first information. Correspondingly, the second communication apparatus receives the third indication information from the first communication apparatus, and sends the first information to the first communication apparatus based on the third indication information.

For example, the first information sent by the second communication apparatus to the first communication apparatus is first information for which a forwarding delay of forwarding the first reference signal by the satellite and/or a forwarding delay of forwarding the second reference signal by the satellite are/is considered.

For example, the forwarding delay of forwarding the first reference signal by the satellite and the forwarding delay of forwarding the second reference signal by the satellite are not considered for the first information sent by the second communication apparatus to the first communication apparatus. In this case, the first information sent by the second communication apparatus to the third communication apparatus may further include the forwarding delay of forwarding the first reference signal by the satellite and/or the forwarding delay of forwarding the second reference signal by the satellite. The first communication apparatus may perform correction processing on the first information based on the forwarding delay of forwarding the first reference signal by the satellite and/or the forwarding delay of forwarding the second reference signal by the satellite, so that accuracy of a determined location of the third communication apparatus can be improved.

In a fourth implementation, the third communication apparatus sends the first information to the first communication apparatus. Correspondingly, the first communication apparatus receives the first information. For example, the first communication apparatus receives the first information from the third communication apparatus. For another example, the first communication apparatus receives, from the second communication apparatus, the first information that is from the third communication apparatus. Specifically, the third communication apparatus determines the first information based on fourth information determined by the third communication apparatus.

Optionally, the first communication apparatus sends fourth indication information to the third communication apparatus based on capability information of the third communication apparatus. The fourth indication information indicates the third communication apparatus to send the first information. Correspondingly, the third communication apparatus receives the fourth indication information from the first communication apparatus, and sends the first information to the first communication apparatus based on the fourth indication information.

In a fifth implementation, the third communication apparatus sends fifth information to the first communication apparatus. The fifth information includes second time difference information, second position information of the satellite, and a delay of a feeder link, and the second time difference information is determined based on a third moment at which the third communication apparatus receives the first reference signal and a fourth moment at which the third communication apparatus sends the second reference signal. The delay of the feeder link includes time required for the first reference signal to arrive at the satellite from the second communication apparatus, and/or time required for the second reference signal to arrive at the second communication apparatus from the satellite. The delay of the feeder link is determined by the second communication apparatus and sent to the third communication apparatus. Correspondingly, the first communication apparatus receives the fifth information.

The second communication apparatus sends second information to the first communication apparatus. The second information includes first time difference information, and the first time difference information is determined based on a first moment at which the second communication apparatus sends the first reference signal to the third communication apparatus and a second moment at which the second communication apparatus receives the second reference signal from the third communication apparatus. Correspondingly, the first communication apparatus receives the second information from the second communication apparatus.

The first communication apparatus determines the first information based on the fifth information and the second information. Specifically, the first communication apparatus determines, based on the first time difference information in the second information and the second time difference information in the fifth information, time required for the first reference signal to arrive at the third communication apparatus from the second communication apparatus and/or time required for the second reference signal to arrive at the second communication apparatus from the third communication apparatus. The first communication apparatus may determine, based on the time required for the first reference signal to arrive at the third communication apparatus from the second communication apparatus and/or the time required for the second reference signal to arrive at the second communication apparatus from the third communication apparatus, and the delay of the feeder link, the time required for the first reference signal to arrive at the third communication apparatus from the satellite and the time required for the second reference signal to arrive at the satellite from the third communication apparatus. The first communication apparatus may determine, based on the second time difference information in the fifth information and the second position information of the satellite, the position at which the satellite sends the first reference signal and the position at which the satellite receives the second reference signal.

Optionally, the second information further includes a forwarding delay of forwarding the first reference signal by the satellite and/or a forwarding delay of forwarding the second reference signal by the satellite. The first communication apparatus may deduct the forwarding delay of forwarding the first reference signal by the satellite and/or the forwarding delay of forwarding the second reference signal by the satellite from the delay of the feeder link. This can improve accuracy of the first information determined by the first communication apparatus, and can improve accuracy of a determined location of the third communication apparatus.

420: The first communication apparatus determines the location of the third communication apparatus based on the first information. For example, the first communication apparatus determines the location of the third communication apparatus based on the time required for the first reference signal to arrive at the third communication apparatus from the satellite, the time required for the second reference signal to arrive at the satellite from the third communication apparatus, the position at which the satellite sends the first reference signal, and the position at which the satellite receives the second reference signal.

In the technical solution provided in this embodiment of this application, the first communication apparatus may determine the location of the third communication apparatus in a satellite communication system based on at least one of the obtained time required for the first reference signal to arrive at the third communication apparatus from the satellite, the obtained time required for the second reference signal to arrive at the satellite from the third communication apparatus, the obtained position at which the satellite sends the first reference signal, and the obtained position at which the satellite receives the second reference signal, so that location verification of the third communication apparatus in the satellite communication system can be implemented.

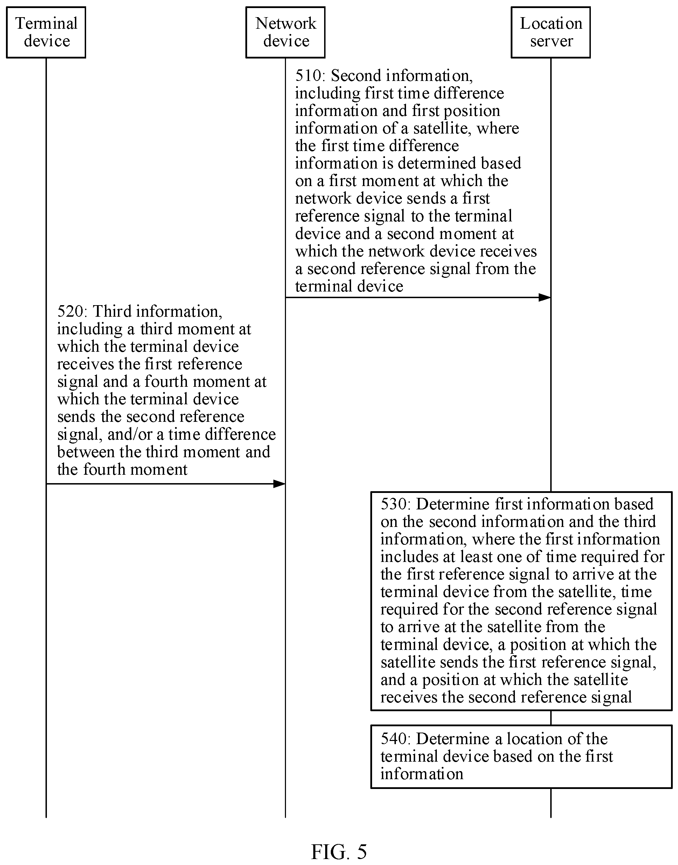

FIG. 5 is a schematic interaction flowchart of a method for determining a location of a terminal device according to an embodiment of this application. A network device in this embodiment of this application may be a base station.

510: The network device sends second information to a location server, where the second information includes first time difference information and first position information of a satellite, the first time difference information is determined based on a first moment at which the network device sends a first reference signal to the terminal device and a second moment at which the network device receives a second reference signal from the terminal device, the network device communicates with the terminal device via the satellite, and the satellite is configured to forward the first reference signal and the second reference signal. Correspondingly, the location server receives the second information from the network device.

For example, the first time difference information includes the first moment at which the network device sends the first reference signal to the terminal device and the second moment at which the network device receives the second reference signal from the terminal device, and/or a time difference between the first moment and the second moment.

Optionally, the first position information of the satellite includes a position of the satellite at a first reference moment, and the first reference moment includes at least one of the first moment, the second moment, or an intermediate moment between the first moment and the second moment; or the first position information of the satellite includes a first ephemeris of the satellite. Optionally, the first reference moment may alternatively be any moment between the first moment and the second moment, or the first reference moment may be a moment at which the network device sends the second information. The first reference moment may be a predefined moment, or may be a moment determined by the network device. This is not specifically limited in this embodiment of this application.

For example, the first position information of the satellite includes a position of the satellite at the first moment and a position of the satellite at the second moment. For example, the first position information of the satellite includes a position of the satellite at the intermediate moment between the first moment and the second moment. For example, the first position information of the satellite includes the first ephemeris of the satellite in a time period from the first moment to the second moment.

520: The terminal device sends third information to the location server, where the third information includes a third moment at which the terminal device receives the first reference signal and a fourth moment at which the terminal device sends the second reference signal, and/or a time difference between the third moment and the fourth moment. Correspondingly, the location server receives the third information. For example, the location server receives the third information from the terminal device. For another example, the location server receives, from the network device, the third information that is from the terminal device.

Step 520 may be performed before step 510, or step 520 and step 510 may be simultaneously performed. This is not limited in this embodiment of this application.

530: The location server determines first information based on the second information and the third information, where the first information includes at least one of time required for the first reference signal to arrive at the terminal device from the satellite, time required for the second reference signal to arrive at the satellite from the terminal device, a position at which the satellite sends the first reference signal, and a position at which the satellite receives the second reference signal.

Optionally, the location server determines a delay of a feeder link based on the second information, where the delay of the feeder link includes time required for the first reference signal to arrive at the satellite from the network device and/or time required for the second reference signal to arrive at the network device from the satellite. The location server determines the first information based on the delay of the feeder link, the second information, and the third information.

Optionally, the second information further includes a delay of a feeder link, and the delay of the feeder link includes time required for the first reference signal to arrive at the satellite from the network device and/or time required for the second reference signal to arrive at the network device from the satellite. In this example, the network device determines the delay of the feeder link, and sends the determined delay of the feeder link to the location server. In this case, the location server does not need to determine the delay of the feeder link, and may directly determine the first information based on the second information and the third information.

540: The location server determines the location of the terminal device based on the first information. For example, the location server determines the location of the terminal device based on the time required for the first reference signal to arrive at the terminal device from the satellite, the time required for the second reference signal to arrive at the satellite from the terminal device, the position at which the satellite sends the first reference signal, and the position at which the satellite receives the second reference signal.

Optionally, the second information further includes a forwarding delay of forwarding the first reference signal by the satellite and/or a forwarding delay of forwarding the second reference signal by the satellite. The location server may deduct the forwarding delay of forwarding the first reference signal by the satellite and/or the forwarding delay of forwarding the second reference signal by the satellite from the delay of the feeder link. This can improve accuracy of the first information determined by the location server, and can improve accuracy of the determined location of the terminal device.

Different information in the second information may be placed in one piece of signaling, or may be placed in different pieces of signaling. This is not specifically limited in this embodiment of this application.

Optionally, before the network device sends the second information to the location server, the location server sends first indication information to the network device, where the first indication information indicates the network device to send the second information. Correspondingly, the network device receives the first indication information from the location server, and sends the second information to the location server based on the first indication information.

In the technical solution provided in this embodiment of this application, the location server may determine the first information based on the second information sent by the network device and the third information sent by the terminal device, and determine the location of the terminal device in a satellite communication system based on the first information.

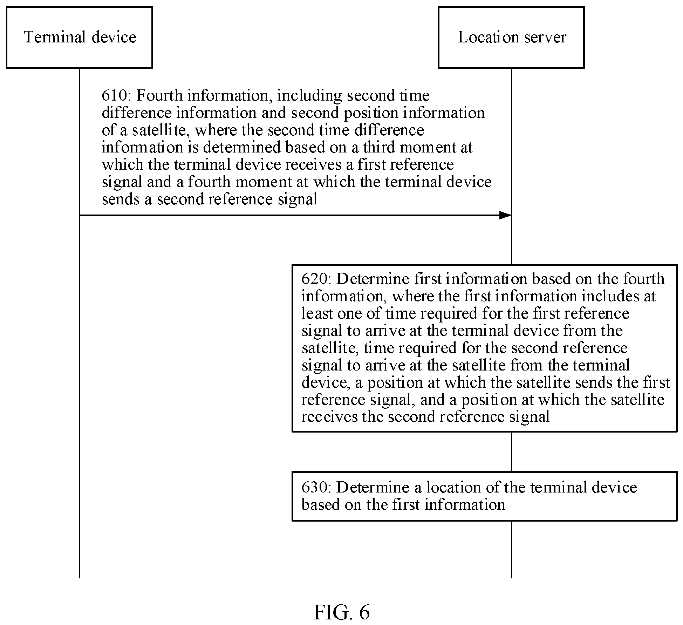

FIG. 6 is a schematic interaction flowchart of another method for determining a location of a terminal device according to an embodiment of this application. A network device in this embodiment of this application may be a base station.

610: The terminal device sends fourth information to a location server, where the fourth information includes second time difference information and second position information of a satellite, and the second time difference information is determined based on a third moment at which the terminal device receives a first reference signal and a fourth moment at which the terminal device sends a second reference signal. The network device communicates with the terminal device via the satellite, and the satellite is configured to forward the first reference signal and the second reference signal. Correspondingly, the location server receives the fourth information. For example, the location server receives the fourth information from the terminal device. For another example, the location server receives, from the network device, the fourth information that is from the terminal device.

For example, the second time difference information includes the third moment at which the terminal device receives the first reference signal and the fourth moment at which the terminal device sends the second reference signal, and/or a time difference between the third moment and the fourth moment.

Optionally, the second position information of the satellite includes a position of the satellite at a second reference moment, and the second reference moment includes at least one of the third moment, the fourth moment, or an intermediate moment between the third moment and the fourth moment; or the second position information of the satellite includes a second ephemeris of the satellite. Optionally, the second reference moment may alternatively be any moment between the third moment and the fourth moment, or the second reference moment may be a moment at which the terminal device sends the fourth information. The second reference moment may be a predefined moment, or may be a moment determined by the network device. This is not specifically limited in this embodiment of this application.

For example, the second position information of the satellite includes a position of the satellite at the third moment and a position of the satellite at the fourth moment. For example, the second position information of the satellite includes a position of the satellite at the intermediate moment between the third moment and the fourth moment. For example, the second position information of the satellite includes the second ephemeris of the satellite in a time period from the third moment to the fourth moment.

Optionally, the terminal device sends capability information of the terminal device to the location server, where the capability information indicates a computing capability of the terminal device. Correspondingly, the location server receives the capability information. The location server determines, based on the capability information of the terminal device, whether the terminal device needs to report the fourth information. If the location server determines that the terminal device needs to report the fourth information, the location server sends second indication information to the terminal device, where the second indication information indicates the terminal device to send the fourth information. Correspondingly, the terminal device receives the second indication information from the location server, and sends the fourth information to the location server based on the second indication information.

620: The location server determines first information based on the fourth information, where the first information includes at least one of time required for the first reference signal to arrive at the terminal device from the satellite, time required for the second reference signal to arrive at the satellite from the terminal device, a position at which the satellite sends the first reference signal, and a position at which the satellite receives the second reference signal.

630: The location server determines the location of the terminal device based on the first information. For example, the location server determines the location of the terminal device based on the time required for the first reference signal to arrive at the terminal device from the satellite, the time required for the second reference signal to arrive at the satellite from the terminal device, the position at which the satellite sends the first reference signal, and the position at which the satellite receives the second reference signal.

In the technical solution provided in this embodiment of this application, the location server may directly determine the first information based on the fourth information sent by the terminal device, and determine the location of the terminal device in a satellite communication system based on the first information. The location server does not need to know a first moment at which the network device sends the first reference signal and a second moment at which the network device receives the second reference signal, and does not need to know a forwarding delay of forwarding the first reference signal by the satellite and a forwarding delay of forwarding the second reference signal by the satellite.

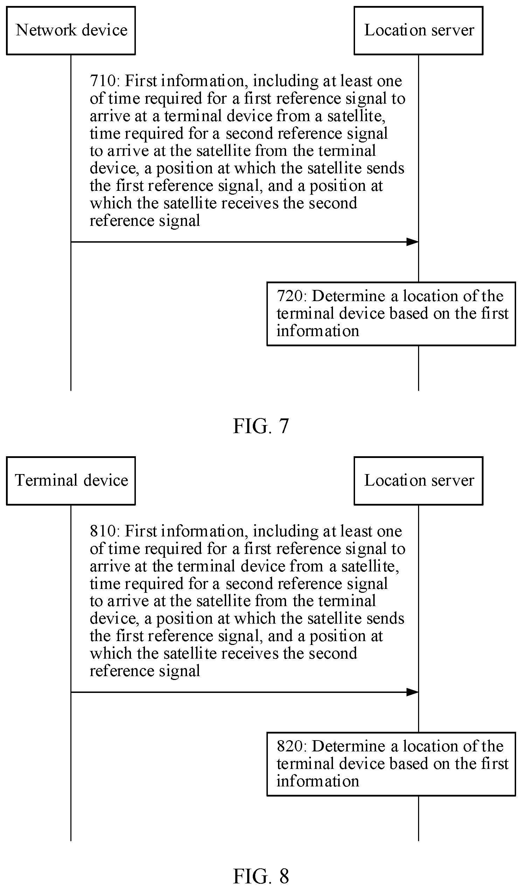

FIG. 7 is a schematic interaction flowchart of another method for determining a location of a terminal device according to an embodiment of this application. A network device in this embodiment of this application may be a base station.

710: The network device sends first information to a location server, where the first information includes at least one of time required for a first reference signal to arrive at the terminal device from a satellite, time required for a second reference signal to arrive at the satellite from the terminal device, a position at which the satellite sends the first reference signal, and a position at which the satellite receives the second reference signal, the network device communicates with the terminal device via the satellite, and the satellite is configured to forward the first reference signal and the second reference signal. Correspondingly, the location server receives the first information from the network device.

720: The location server determines the location of the terminal device based on the first information.

Optionally, before the network device sends the first information to the location server, the terminal device sends third information to the network device, where the third information includes a third moment at which the terminal device receives the first reference signal and a fourth moment at which the terminal device sends the second reference signal, and/or a time difference between the third moment and the fourth moment. Correspondingly, the network device receives the third information from the terminal device. The network device determines the first information based on second information determined by the network device and the third information sent by the terminal device.

Optionally, the location server sends third indication information to the network device, where the third indication information indicates the network device to send the first information. Correspondingly, the network device receives the third indication information from the location server, and sends the first information to the location server based on the third indication information.

For example, the first information sent by the network device to the location server is first information for which a forwarding delay of forwarding the first reference signal by the satellite and/or a forwarding delay of forwarding the second reference signal by the satellite are/is considered.

For example, the forwarding delay of forwarding the first reference signal by the satellite and the forwarding delay of forwarding the second reference signal by the satellite are not considered for the first information sent by the network device to the location server. In this case, the first information sent by the network device to the terminal device may further include the forwarding delay of forwarding the first reference signal by the satellite and/or the forwarding delay of forwarding the second reference signal by the satellite. The location server may perform correction processing on the first information based on the forwarding delay of forwarding the first reference signal by the satellite and/or the forwarding delay of forwarding the second reference signal by the satellite, so that accuracy of the determined location of the terminal device can be improved.

In the technical solution provided in this embodiment of this application, the network device sends the first information determined by the network device to the location server, and the location server may determine the location of the terminal device in a satellite communication system based on the first information.

FIG. 8 is a schematic interaction flowchart of another method for determining a location of a terminal device according to an embodiment of this application. A network device in this embodiment of this application may be a base station.

810: The terminal device sends first information to a location server, where the first information includes at least one of time required for a first reference signal to arrive at the terminal device from a satellite, time required for a second reference signal to arrive at the satellite from the terminal device, a position at which the satellite sends the first reference signal, and a position at which the satellite receives the second reference signal, the network device communicates with the terminal device via the satellite, and the satellite is configured to forward the first reference signal and the second reference signal. Correspondingly, the location server receives the first information. For example, the location server receives the first information from the terminal device. For another example, the location server receives, from the network device, the first information that is from the terminal device. Specifically, the terminal device determines the first information based on fourth information determined by the terminal device.

Optionally, the location server sends fourth indication information to the terminal device based on capability information of the terminal device, where the fourth indication information indicates the terminal device to send the first information. Correspondingly, the terminal device receives the fourth indication information from the location server, and sends the first information to the location server based on the fourth indication information.

820: The location server determines the location of the terminal device based on the first information.

In the technical solution provided in this embodiment of this application, the terminal device sends the first information determined by the terminal device to the location server, and the location server may determine the location of the terminal device in a satellite communication system based on the first information.

The foregoing describes the methods for determining the location of the terminal device provided in embodiments of this application. The following describes an execution body for performing the foregoing methods for determining the location of the terminal device.

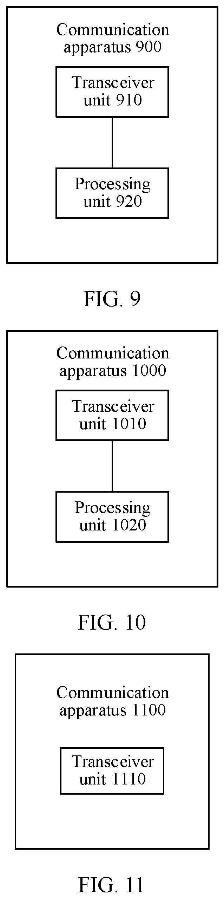

FIG. 9 is a block diagram of a communication apparatus 900 according to an embodiment of this application. The apparatus may be used in a first communication apparatus in embodiments of this application, and the first communication apparatus may be a location server. The communication apparatus 900 includes:
a transceiver unit 910, configured to obtain first information, where the first information includes at least one of time required for a first reference signal to arrive at a third communication apparatus from a satellite, time required for a second reference signal to arrive at the satellite from the third communication apparatus, a position at which the satellite sends the first reference signal, and a position at which the satellite receives the second reference signal, a second communication apparatus communicates with the third communication apparatus via the satellite, and the satellite is configured to forward the first reference signal and the second reference signal; and
a processing unit 920, configured to determine a location of the third communication apparatus based on the first information, where the third communication apparatus includes a terminal device.

Optionally, the transceiver unit 910 is specifically configured to receive second information from the second communication apparatus, where the second information includes first time difference information and first position information of the satellite, and the first time difference information is determined based on a first moment at which the second communication apparatus sends the first reference signal to the third communication apparatus and a second moment at which the second communication apparatus receives the second reference signal from the third communication apparatus.

The transceiver unit 910 is further specifically configured to receive third information, where the third information includes a third moment at which the third communication apparatus receives the first reference signal and a fourth moment at which the third communication apparatus sends the second reference signal, and/or a time difference between the third moment and the fourth moment.

The processing unit 920 is specifically configured to determine the first information based on the second information and the third information.

Optionally, the first position information of the satellite includes a position of the satellite at a first reference moment, and the first reference moment includes at least one of the first moment, the second moment, or an intermediate moment between the first moment and the second moment; or the first position information of the satellite includes a first ephemeris of the satellite.

Optionally, the processing unit 920 is specifically configured to: determine a delay of a feeder link based on the second information, where the delay of the feeder link includes time required for the first reference signal to arrive at the satellite from the second communication apparatus and/or time required for the second reference signal to arrive at the second communication apparatus from the satellite; and determine the first information based on the delay of the feeder link, the second information, and the third information.

Optionally, the second information further includes a delay of a feeder link, and the delay of the feeder link includes time required for the first reference signal to arrive at the satellite from the second communication apparatus and/or time required for the second reference signal to arrive at the second communication apparatus from the satellite.

Optionally, the second information further includes a forwarding delay of forwarding the first reference signal by the satellite and/or a forwarding delay of forwarding the second reference signal by the satellite.

Optionally, the transceiver unit 910 is specifically configured to receive fourth information, where the fourth information includes second time difference information and second position information of the satellite, and the second time difference information is determined based on a third moment at which the third communication apparatus receives the first reference signal and a fourth moment at which the third communication apparatus sends the second reference signal.

The processing unit 920 is specifically configured to determine the first information based on the fourth information.

Optionally, the second position information of the satellite includes a position of the satellite at a second reference moment, and the second reference moment includes at least one of the third moment, the fourth moment, or an intermediate moment between the third moment and the fourth moment; or the second position information of the satellite includes a second ephemeris of the satellite.

Optionally, the transceiver unit 910 is specifically configured to receive the first information from the second communication apparatus or the third communication apparatus.

FIG. 10 is a block diagram of another communication apparatus 1000 according to an embodiment of this application. The apparatus may be used in a second communication apparatus in embodiments of this application, and the second communication apparatus may be a network device. The communication apparatus 1000 includes:
a transceiver unit 1010, configured to send first information to a first communication apparatus, where the first information includes at least one of time required for a first reference signal to arrive at a third communication apparatus from a satellite, time required for a second reference signal to arrive at the satellite from the third communication apparatus, a position at which the satellite sends the first reference signal, and a position at which the satellite receives the second reference signal, the apparatus communicates with the third communication apparatus via the satellite, the satellite is configured to forward the first reference signal and the second reference signal, and the third communication apparatus includes a terminal device; or
the transceiver unit 1010 is configured to send second information to the first communication apparatus, where the second information includes first time difference information and first position information of the satellite, and the first time difference information is determined based on a first moment at which the transceiver unit 1010 sends the first reference signal to the third communication apparatus and a second moment at which the transceiver unit 1010 receives the second reference signal from the third communication apparatus.

Optionally, the first position information of the satellite includes a position of the satellite at a first reference moment, and the first reference moment includes at least one of the first moment, the second moment, or an intermediate moment between the first moment and the second moment; or the first position information of the satellite includes a first ephemeris of the satellite.

Optionally, the second information further includes a delay of a feeder link, and the delay of the feeder link includes time required for the first reference signal to arrive at the satellite from the apparatus and/or time required for the second reference signal to arrive at the apparatus from the satellite.

Optionally, the second information further includes a forwarding delay of forwarding the first reference signal by the satellite and/or a forwarding delay of forwarding the second reference signal by the satellite.

Optionally, the transceiver unit 1010 is further configured to receive third information from the third communication apparatus, where the third information includes a third moment at which the third communication apparatus receives the first reference signal and a fourth moment at which the third communication apparatus sends the second reference signal, and/or a time difference between the third moment and the fourth moment.

The apparatus 1000 further includes a processing unit 1020. The processing unit 1020 is configured to determine the first information based on the third information and the second information.

FIG. 11 is a block diagram of another communication apparatus 1100 according to an embodiment of this application. The apparatus may be used in a third communication apparatus in embodiments of this application, and the third communication apparatus may be a terminal device. The communication apparatus 1100 includes:
a transceiver unit 1110, configured to send first information to a first communication apparatus, where the first information includes at least one of time required for a first reference signal to arrive at the apparatus from a satellite, time required for a second reference signal to arrive at the satellite from the apparatus, a position at which the satellite sends the first reference signal, and a position at which the satellite receives the second reference signal, the apparatus communicates with the second communication apparatus via the satellite, the satellite is configured to forward the first reference signal and the second reference signal; or
the transceiver unit 1110 is configured to send fourth information to the first communication apparatus, where the fourth information includes second time difference information and second position information of the satellite, and the second time difference information is determined based on a third moment at which the transceiver unit 1110 receives the first reference signal and a fourth moment at which the transceiver unit 1110 sends the second reference signal.

Optionally, the second position information of the satellite includes a position of the satellite at a second reference moment, and the second reference moment includes at least one of the third moment, the fourth moment, or an intermediate moment between the third moment and the fourth moment; or the second position information of the satellite includes a second ephemeris of the satellite.

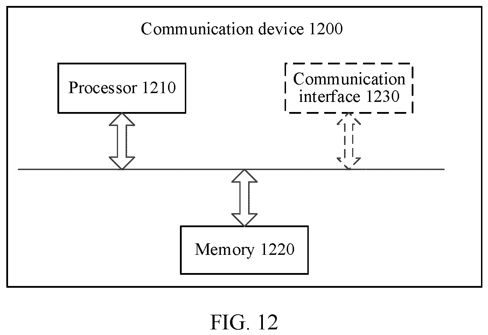

FIG. 12 is a block diagram of a communication device 1200 according to an embodiment of this application. The communication device 1200 includes a processor 1210, a memory 1220, and a communication interface 1230.

The memory 1220 is configured to store executable instructions.

The processor 1210 is coupled to the memory 1220 through the communication interface 1230. The processor 1210 is configured to invoke and run the executable instructions in the memory 1220, to implement the methods in embodiments of this application. The communication device may be the first device or the second device in embodiments of this application. Optionally, the processor 1210 and the memory 1220 are integrated together.

The processor 1210 may be an integrated circuit chip, and has a signal processing capability. In an implementation process, steps in the foregoing method embodiments can be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, the steps, and logic block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

Optionally, embodiments of this application further provide a communication device. The communication device includes an input/output interface and a logic circuit. The input/output interface is configured to obtain input information and/or output information. The logic circuit is configured to perform the method in any one of the foregoing method embodiments, and perform processing and/or generate output information based on the input information.

An embodiment of this application further provides a communication system, including a first communication apparatus, a second communication apparatus, and a third communication apparatus. The first communication apparatus, the second communication apparatus, and the third communication apparatus are configured to implement the methods in the foregoing method embodiments.

An embodiment of this application further provides a communication system, including the network device, the terminal device, and the location server in any one of the foregoing method embodiments.

An embodiment of this application further provides a computer-readable storage medium. The computer-readable storage medium stores a computer program used to implement the methods in the foregoing method embodiments. When the computer program is run on a computer, the computer is enabled to implement the methods in the foregoing method embodiments.

An embodiment of this application further provides a computer program product. The computer program product includes computer program code. When the computer program code is run on a computer, the methods in the foregoing method embodiments can be performed.

An embodiment of this application further provides a chip, including a processor. The processor is connected to a memory. The memory is configured to store a computer program. The processor is configured to execute the computer program stored in the memory, to enable the chip to perform the methods in the foregoing method embodiments.

It should be understood that in embodiments of this application, numbers "first", "second", and the like are merely for distinguishing between different objects, for example, to distinguish between different moments or different information, and do not constitute a limitation on the scope of embodiments of this application. Embodiments of this application are not limited thereto.

In addition, the term "and/or" in this application describes only an association relationship for describing associated objects and indicates that three relationships may exist. For example, A and/or B may indicate the following three cases: Only A exists, both A and B exist, and only B exists. In addition, the character "/" in this specification usually indicates an "or" relationship between the associated objects. In this application, the term "at least one" may indicate "one" and "two or more". For example, at least one of A, B, and C may indicate the following seventh cases: Only A exists, only B exists, only C exists, both A and B exist, both A and C exist, both C and B exist, and A, B, and C all exist.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each specific application, but such implementation should not be considered beyond the scope of this application.

It may be clearly understood by a person skilled in the art that, for the purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A method for determining a location of a terminal device, comprising:
obtaining, by a first communication apparatus, first information, wherein the first information comprises at least one of time required for a first reference signal to arrive at a third communication apparatus from a satellite, time required for a second reference signal to arrive at the satellite from the third communication apparatus, a position at which the satellite sends the first reference signal, and a position at which the satellite receives the second reference signal, a second communication apparatus communicates with the third communication apparatus via the satellite, and the satellite is configured to forward the first reference signal and the second reference signal; and
determining, by the first communication apparatus, a location of the third communication apparatus based on the first information, wherein the third communication apparatus comprises the terminal device.

2. The method according to claim 1, wherein obtaining, by the first communication apparatus, the first information comprises:
receiving, by the first communication apparatus, second information from the second communication apparatus, wherein the second information comprises first time difference information and first position information of the satellite, and the first time difference information is determined based on a first moment at which the second communication apparatus sends the first reference signal to the third communication apparatus and a second moment at which the second communication apparatus receives the second reference signal from the third communication apparatus;
receiving, by the first communication apparatus, third information, wherein the third information comprises a third moment at which the third communication apparatus receives the first reference signal and a fourth moment at which the third communication apparatus sends the second reference signal, and/or a time difference between the third moment and the fourth moment; and
determining, by the first communication apparatus, the first information based on the second information and the third information.

3. The method according to claim 2, wherein
the first position information of the satellite comprises a position of the satellite at a first reference moment, and the first reference moment comprises at least one of the first moment, the second moment, or an intermediate moment between the first moment and the second moment; or
the first position information of the satellite comprises a first ephemeris of the satellite.

4. The method according to claim 2 or 3, wherein determining, by the first communication apparatus, the first information based on the second information and the third information comprises:
determining, by the first communication apparatus, a delay of a feeder link based on the second information, wherein the delay of the feeder link comprises time required for the first reference signal to arrive at the satellite from the second communication apparatus and/or time required for the second reference signal to arrive at the second communication apparatus from the satellite; and
determining, by the first communication apparatus, the first information based on the delay of the feeder link, the second information, and the third information.

5. The method according to claim 2 or 3, wherein
the second information further comprises a delay of a feeder link, and the delay of the feeder link comprises time required for the first reference signal to arrive at the satellite from the second communication apparatus and/or time required for the second reference signal to arrive at the second communication apparatus from the satellite.

6. The method according to any one of claims 2 to 5, wherein
the second information further comprises a forwarding delay of forwarding the first reference signal by the satellite and/or a forwarding delay of forwarding the second reference signal by the satellite.

7. The method according to claim 1, wherein obtaining, by the first communication apparatus, the first information comprises:
receiving, by the first communication apparatus, fourth information, wherein the fourth information comprises second time difference information and second position information of the satellite, and the second time difference information is determined based on a third moment at which the third communication apparatus receives the first reference signal and a fourth moment at which the third communication apparatus sends the second reference signal; and
determining, by the first communication apparatus, the first information based on the fourth information.

8. The method according to claim 7, wherein
the second position information of the satellite comprises a position of the satellite at a second reference moment, and the second reference moment comprises at least one of the third moment, the fourth moment, or an intermediate moment between the third moment and the fourth moment; or
the second position information of the satellite comprises a second ephemeris of the satellite.

9. The method according to claim 1, wherein obtaining, by the first communication apparatus, the first information comprises:
receiving, by the first communication apparatus, the first information from the second communication apparatus or the third communication apparatus.

10. A method for determining a location of a terminal device, comprising:
sending, by a second communication apparatus, first information to a first communication apparatus, wherein the first information comprises at least one of time required for a first reference signal to arrive at a third communication apparatus from a satellite, time required for a second reference signal to arrive at the satellite from the third communication apparatus, a position at which the satellite sends the first reference signal, and a position at which the satellite receives the second reference signal, the second communication apparatus communicates with the third communication apparatus via the satellite, the satellite is configured to forward the first reference signal and the second reference signal, and the third communication apparatus comprises the terminal device; or
sending, by the second communication apparatus, second information to the first communication apparatus, wherein the second information comprises first time difference information and first position information of the satellite, and the first time difference information is determined based on a first moment at which the second communication apparatus sends the first reference signal to the third communication apparatus and a second moment at which the second communication apparatus receives the second reference signal from the third communication apparatus.

11. The method according to claim 10, wherein
the first position information of the satellite comprises a position of the satellite at a first reference moment, and the first reference moment comprises at least one of the first moment, the second moment, or an intermediate moment between the first moment and the second moment; or
the first position information of the satellite comprises a first ephemeris of the satellite.

12. The method according to claim 10 or 11, wherein
the second information further comprises a delay of a feeder link, and the delay of the feeder link comprises time required for the first reference signal to arrive at the satellite from the second communication apparatus and/or time required for the second reference signal to arrive at the second communication apparatus from the satellite.

13. The method according to any one of claims 10 to 12, wherein
the second information further comprises a forwarding delay of forwarding the first reference signal by the satellite and/or a forwarding delay of forwarding the second reference signal by the satellite.

14. The method according to any one of claims 10 to 13, wherein before sending, by the second communication apparatus, the first information to the first communication apparatus, the method further comprises:
receiving, by the second communication apparatus, third information from the third communication apparatus, wherein the third information comprises a third moment at which the third communication apparatus receives the first reference signal and a fourth moment at which the third communication apparatus sends the second reference signal, and/or a time difference between the third moment and the fourth moment; and
determining, by the second communication apparatus, the first information based on the third information and the second information.

15. A method for determining a location of a terminal device, comprising:
sending, by a third communication apparatus, first information to a first communication apparatus, wherein the first information comprises at least one of time required for a first reference signal to arrive at the third communication apparatus from a satellite, time required for a second reference signal to arrive at the satellite from the third communication apparatus, a position at which the satellite sends the first reference signal, and a position at which the satellite receives the second reference signal, the third communication apparatus communicates with the second communication apparatus via the satellite, the satellite is configured to forward the first reference signal and the second reference signal, and the third communication apparatus comprises the terminal device; or
sending, by the third communication apparatus, fourth information to the first communication apparatus, wherein the fourth information comprises second time difference information and second position information of the satellite, and the second time difference information is determined based on a third moment at which the third communication apparatus receives the first reference signal and a fourth moment at which the third communication apparatus sends the second reference signal.

16. The method according to claim 15, wherein
the second position information of the satellite comprises a position of the satellite at a second reference moment, and the second reference moment comprises at least one of the third moment, the fourth moment, or an intermediate moment between the third moment and the fourth moment; or
the second position information of the satellite comprises a second ephemeris of the satellite.

17. A method for determining a location of a terminal device, comprising:
sending, by a network device, second information to a location server, wherein the second information comprises first time difference information and first position information of a satellite, the first time difference information is determined based on a first moment at which the network device sends a first reference signal to the terminal device and a second moment at which the network device receives a second reference signal from the terminal device, the network device communicates with the terminal device via the satellite, and the satellite is configured to forward the first reference signal and the second reference signal;
receiving, by the location server, the second information from the network device;
sending, by the terminal device, third information to the location server, wherein the third information comprises a third moment at which the terminal device receives the first reference signal and a fourth moment at which the terminal device sends the second reference signal, and/or a time difference between the third moment and the fourth moment;
receiving, by the location server, the third information;
determining, by the location server, first information based on the second information and the third information, wherein the first information comprises at least one of time required for the first reference signal to arrive at the terminal device from the satellite, time required for the second reference signal to arrive at the satellite from the terminal device, a position at which the satellite sends the first reference signal, and a position at which the satellite receives the second reference signal; and
determining, by the location server, the location of the terminal device based on the first information.

18. The method according to claim 17, wherein
the first position information of the satellite comprises a position of the satellite at a first reference moment, and the first reference moment comprises at least one of the first moment, the second moment, or an intermediate moment between the first moment and the second moment; or
the first position information of the satellite comprises a first ephemeris of the satellite.

19. The method according to claim 17 or 18, wherein determining, by the location server, the first information based on the second information and the third information comprises:
determining, by the location server, a delay of a feeder link based on the second information, wherein the delay of the feeder link comprises time required for the first reference signal to arrive at the satellite from the network device and/or time required for the second reference signal to arrive at the network device from the satellite; and
determining, by the location server, the first information based on the delay of the feeder link, the second information, and the third information.

20. The method according to claim 17 or 18, wherein
the second information further comprises a delay of a feeder link, and the delay of the feeder link comprises time required for the first reference signal to arrive at the satellite from the network device and/or time required for the second reference signal to arrive at the network device from the satellite.

21. The method according to any one of claims 17 to 20, wherein
the second information further comprises a forwarding delay of forwarding the first reference signal by the satellite and/or a forwarding delay of forwarding the second reference signal by the satellite.

22. A method for determining a location of a terminal device, comprising:
sending, by the terminal device, fourth information to a location server, wherein the fourth information comprises second time difference information and second position information of a satellite, the second time difference information is determined based on a third moment at which the terminal device receives a first reference signal and a fourth moment at which the terminal device sends a second reference signal, the network device communicates with the terminal device via the satellite, and the satellite is configured to forward the first reference signal and the second reference signal;
receiving, by the location server, the fourth information;
determining, by the location server, first information based on the fourth information, wherein the first information comprises at least one of time required for the first reference signal to arrive at the terminal device from the satellite, time required for the second reference signal to arrive at the satellite from the terminal device, a position at which the satellite sends the first reference signal, and a position at which the satellite receives the second reference signal; and
determining, by the location server, the location of the terminal device based on the first information.

23. The method according to claim 22, wherein
the second position information of the satellite comprises a position of the satellite at a second reference moment, and the second reference moment comprises at least one of the third moment, the fourth moment, or an intermediate moment between the third moment and the fourth moment; or
the second position information of the satellite comprises a second ephemeris of the satellite.

24. A method for determining a location of a terminal device, comprising:
sending, by a network device, first information to a location server, wherein the first information comprises at least one of time required for a first reference signal to arrive at the terminal device from a satellite, time required for a second reference signal to arrive at the satellite from the terminal device, a position at which the satellite sends the first reference signal, and a position at which the satellite receives the second reference signal, the network device communicates with the terminal device via the satellite, and the satellite is configured to forward the first reference signal and the second reference signal;
receiving, by the location server, the first information from the network device; and
determining, by the location server, the location of the terminal device based on the first information.

25. A method for determining a location of a terminal device, comprising:
sending, by the terminal device, first information to a location server, wherein the first information comprises at least one of time required for a first reference signal to arrive at the terminal device from a satellite, time required for a second reference signal to arrive at the satellite from the terminal device, a position at which the satellite sends the first reference signal, and a position at which the satellite receives the second reference signal, the terminal device communicates with the network device via the satellite, and the satellite is configured to forward the first reference signal and the second reference signal;
receiving, by the location server, the first information from the terminal device; and
determining, by the location server, the location of the terminal device based on the first information.

26. A communication apparatus, comprising a unit configured to perform the method according to any one of claims 1 to 16.

27. A communication device, comprising a processor and a memory, wherein the memory is configured to store a computer program, and the processor is configured to execute the computer program stored in the memory, to enable the communication device to perform the method according to any one of claims 1 to 16.

28. A communication device, comprising an input/output interface and a logic circuit, wherein
the input/output interface is configured to obtain input information and/or output information; and
the logic circuit is configured to perform the method according to any one of claims 1 to 16, and perform processing based on the input information and/or generate the output information.

29. A communication system, comprising a first communication apparatus, a second communication apparatus, and a third communication apparatus, wherein the first communication apparatus is configured to implement the method according to any one of claims 1 to 9, the second communication apparatus is configured to implement the method according to any one of claims 10 to 14, and the third communication apparatus is configured to implement the method according to claim 15 or 16.

30. A communication system, comprising a network device, a terminal device, and a location server, wherein the network device, the terminal device, and the location server are configured to implement the method according to any one of claims 17 to 25.

31. A computer-readable storage medium, wherein
the computer-readable medium stores a computer program; and
when the computer program is run on a computer, the computer is enabled to perform the method according to any one of claims 1 to 16.

32. A computer program product, comprising a computer program, wherein when the computer program is executed, the method according to any one of claims 1 to 16 is implemented.
